# FASCICULE DE BREVET EUROPEEN

(11) **EP 3 248 765 B1**
(45) Date de publication et mention de la délivrance du brevet: **23.06.2021**
(21) Numéro de dépôt: 17171444.7
(22) Date de dépôt: 17.05.2017
(51) Int. Cl.: B29C 70/38, B29C 70/54

(54) **TÊTE DE DÉPOSE D'UN RUBAN DE FIBRES IMPRÉGNÉES, ET DISPOSITIF DE PLACEMENT D'UN TEL RUBAN**
ABLAGEKOPF EINES BANDS AUS IMPRÄGNIERTEN FASERN, UND VORRICHTUNG ZUM PLATZIEREN EINES SOLCHEN BANDES
A DEPOSITION HEAD FOR DEPOSITING AN IMPREGNATED FIBER TAPE, AND A DEVICE FOR PLACING SUCH A TAPE

(30) Priorité: 24.05.2016 FR 1600833
(43) Date de publication de la demande: 29.11.2017
(73) Titulaire: Airbus Helicopters, 13725 Marignane Cedex (FR)
(72) Inventeur: AMARI, André, 60520 LA CHAPELLE EN SERVAL (FR); DULAC, Guillaume, 95350 SAINT-BRICE SOUS FORET (FR); TARDIEU, Philippe, 95500 LE THILLAY (FR); GAFFIERO, Jacques, 75017 PARIS (FR)
(74) Mandataire: GPI & Associés

(56) Documents cités:
- EP-A2- 0 144 927
- WO-A1-2015/068734
- DE-A1-102012 017 595
- FR-A1- 2 507 959
- US-A- 5 480 508

## Description

La présente invention concerne une tête de dépose d'un ruban de fibres imprégnées, et un dispositif de placement d'un tel ruban de fibres imprégnées. L'invention se situe alors dans le domaine technique de la fabrication de pièces en matériaux composites à l'aide d'un ruban de fibres imprégnées par la méthode de placement de fibres.

La méthode du placement de fibres est une méthode alternative au bobinage d'un filament continu.

Le placement de fibres est un procédé de dépose de fibres, rubans, mèches ou autres renforts similaires, secs ou pré-imprégnés de résine, sur des surfaces de formes diverses. Ce placement est réalisé en mettant en œuvre un dispositif pourvu d'une tête de dépose mobile. La tête de dépose assure donc le positionnement du produit utilisé sur une surface par contact mécanique direct sur cette surface. A cet effet, la tête de dépose est animée par un système de déplacement, de type robot ou portique de positionnement, dont les degrés de liberté sont asservis suivant la géométrie de la surface à couvrir.

Le procédé de placement de fibres permet donc notamment de réaliser des surfaces de grandes dimensions et de faibles épaisseurs, dans les limites de l'encombrement de la tête de dépose.

Notamment, le procédé de placement de fibres permet de réaliser automatiquement des séquences de dépose de rubans. Chaque séquence inclut des opérations d'amorçage, de dépose, et de découpe.

Le placement d'un ruban de fibres sur une pièce par un dispositif de placement peut être difficile. En effet, la matière déposée par les dispositifs de placement sous forme de rubans tend à être pégueuse.

Pour mémoire, la pégosité est l'état d'une surface « collante », à savoir une surface qui a la propriété d'adhérer sur elle-même ou sur un autre corps par simple contact. Le terme « pégosité » est parfois traduit par « tack » en langue anglaise.

En particulier, un ruban de fibres imprégnées par une matrice peut être imprégné par voie humide. Cette technique d'imprégnation consiste à imprégner par exemple des fibres de carbone ou de verre ou encore de basalte par trempage dans une résine à l'état liquide.

Une autre technique consiste à diluer dans un solvant la résine visqueuse puis à évaporer les solvants après imprégnation des fibres. Cette technique est qualifiée d'imprégnation par dissolution ou voie solvant.

Les rubans munis de fibres préalablement imprégnées par voie humide présentent généralement à température ambiante une pégosité supérieure aux rubans préalablement imprégnés par voie solvant. Cette faible viscosité des rubans de fibres préalablement imprégnées par voie solvant est associée à une rigidité plus importante qui procure de plus au ruban de fibres, une plus grande stabilité. Le ruban de fibres est ainsi moins « collant » et plus « rigide » à température ambiante qu'un ruban de fibres imprégnées par voie humide.

Les rubans de fibres présentant une pégosité élevée tendent à adhérer aux surfaces de guidage, de pelage et d'entraînement des dispositifs de placement, voire tendent à encrasser ces dispositifs de placement.

Ainsi, les rubans de fibres utilisés pour réaliser des pièces par placement de fibres sont favorablement imprégnés par voie solvant car ces rubans de fibres imprégnées par voie solvant sont plus faciles à convoyer et à guider, et facilitent la superposition des plis les uns sur les autres. Ces rubans de fibres imprégnées par voie solvant limitent aussi le transfert de résine sur le dispositif de placement ce qui permet de réduire les risques de panne par encrassement et les opérations de nettoyage du dispositif de placement.

Par contre, ces rubans de fibres imprégnées par voie solvant apparaissent sur le marché à des coûts sensiblement plus élevés que les rubans de fibres imprégnées par voie humide.

Par ailleurs, une séquence de placement de fibres comporte successivement une phase d'amorçage, une phase de dépose et une phase de découpe.

Durant la phase d'amorçage, le ruban de fibres est conduit vers la surface de dépose. Durant la phase de dépose, le ruban de fibres est déposé sur la surface de dépose. Enfin, durant la phase de découpe, le ruban de fibres est découpé.

Une tête de dépose comporte alors usuellement un système de découpe. Un système de découpe est constitué par exemple d'un massicot pneumatique animant une lame métallique afin de découper le ruban de fibres. Du fait de l'encombrement du système de découpe, une distance de transition conséquente sépare le plan de coupe du ruban de fibres et le plan de dépose du ruban de fibres sur la surface de dépose. Durant la phase d'amorçage, le ruban de fibres doit donc cheminer le long de cette distance de transition ce qui peut s'avérer délicat, notamment avec des rubans de fibres imprégnées par voie humide peu rigides.

Le document WO0196223 décrit une tête de dépose d'étoupes de fibres agencées sur un rouleau de stockage. La tête de dépose comporte une roue motorisée entraînant le déplacement des étoupes de fibres vers des moyens de compactage via des galets de guidage. A la sortie des moyens de compactage, les étoupes de fibres sont dirigées vers un rouleau de dépose. Un moyen de découpe est interposé entre les moyens de compactage et le rouleau de dépose.

Le document GB 2492594 décrit une tête de dépose. Cette tête de dépose comporte un premier rouleau de stockage autour duquel est enroulé un ruban de protection solidaire d'une résine. La tête de dépose comporte un deuxième rouleau de stockage autour duquel est enroulé un ruban de fibres. Le ruban de fibres est accolé à la résine et au ruban de protection en passant au travers d'un dispositif comprenant un rouleau chauffant et un rouleau d'adhésion. Dès lors, l'ensemble comprenant le ruban de protection, le ruban de fibres et la résine chemine entre un rouleau de dépose et un sabot de pelage. Le ruban de protection tourne autour du sabot de pelage pour être désolidarisé de la résine, la résine et le ruban de fibres étant au contraire déposés sur la surface de dépose. Un sabot de compression comprime alors le ruban de fibres et la résine contre la surface de dépose.

Cette solution met en œuvre un ruban de protection. De manière générale, le pelage d'un ruban de protection peut s'avérer délicat. Des fibres d'un ruban de fibres peuvent en effet dans certaines conditions rester accrochées au ruban de protection.

Le document US5110395 présente une tête de dépose de fibres pour une machine de placement de fibres. Des fibres imprégnées individuellement de résine ou des « étoupes pré-imprégnées" sont amenées à des vitesses indépendantes à partir d'un ensemble de porte-bobines pour appliquer des bandes de fibres sur une surface de dépose.

La tête de dépose comporte un applicateur en forme de patin ou de rouleau pour appliquer le ruban sur la surface de dépose.

Les documents US6540000 et FR2785623 présentent un dispositif muni de bobines comprenant des rubans. Ces rubans sont rassemblés par des poulies de renvoi pour former une nappe de plusieurs rubans juxtaposés qui passe au travers de moyens de freinage pour atteindre un galet de dépose. Les moyens de freinage comprennent deux mâchoires déplacées par un vérin, la nappe circulant entre les deux mâchoires.

Les poulies de renvoi, les moyens de freinage et le galet de dépose sont disposés sur une plaque mobile en élévation.

La plaque porte aussi une lame apte à effectuer une rotation pour couper la nappe contre une enclume ultrasonore de la tête de dépose.

La tête de dépose ne met pas en œuvre un ruban de protection devant être finalement pelé.

Le document FR 2982792 décrit une tête de dépose d'un ruban de fibres imprégnées munie d'une bobine d'alimentation portant un ensemble de rubans comprenant le ruban de fibres imprégnées disposé sur un ruban séparateur. La tête de dépose comporte une bobine de récupération du ruban séparateur ainsi qu'un moyen de désunion du ruban de fibres imprégnées et du ruban séparateur. La tête comporte un lissoir muni d'une arête vive ou arrondie et disposé à la suite du moyen de désunion selon le sens de défilement du ruban de fibres imprégnées, le ruban de fibres imprégnées étant uniquement en contact avec ladite arête.

Les documents US 5480508, DE 102012017595, WO 2015068734 et EP 0144927 sont aussi connus.

Le document US 5480508 présente une tête de dépose muni d'un galet de pelage mobile verticalement.

La présente invention a alors pour objet de proposer une tête de dépose pour permettre de déposer des rubans de fibres imprégnées sur une surface de dépose. Une telle surface de dépose peut être un moule, un mandrin ou encore un ruban de fibres précédemment déposé sur une surface par exemple.

L'invention concerne donc une tête de dépose suivant la revendication 1 d'un ruban de fibres imprégnées.

L'expression « galet de pelage » désigne un organe libre en rotation par rapport au tiroir. En particulier, le galet peut prendre la forme d'une roue, d'un cylindre voire même un organe hémisphérique ou dit « conque tonneau » ...

L'expression « la tête de dépose est munie d'un ensemble de rubans comprenant le ruban de fibres imprégnées disposé sur un ruban de protection » signifie que la tête de dépose porte un tel ensemble. Cet ensemble peut provenir d'une ou plusieurs bobines portées par la tête de dépose ou encore localisées en dehors de cette tête de dépose.

L'expression « actionneur de déplacement » désigne un actionneur apte à déplacer le tiroir en translation, par exemple un vérin hydraulique ou pneumatique éventuellement agencé dans une cavité du tiroir, ou encore un vérin électrique par exemple.

L'invention prévoit donc d'équiper la tête de dépose à l'aide d'un support mécanique guidé en translation, nommé « tiroir ». Ce tiroir peut être qualifié de tiroir d'amorçage et de pelage en raison des fonctions remplies.

Ce tiroir est notamment mobile pour amorcer une séquence de dépose du ruban de fibres imprégnées.

Le tiroir est déplacé de la position supérieure vers la position inférieure pour amener le ruban de fibres imprégnées contre la surface de dépose. Par suite, un ruban de fibres imprégnées peu rigide peut être utilisé.

De plus, ce tiroir porte un galet de pelage qui permet de séparer le ruban de fibres imprégnées et le ruban de protection, selon une configuration particulière pouvant assurant la qualité de l'opération de dépose notamment en limitant un risque de décohésion des fibres du ruban de fibres imprégnées par rupture de fibres et adhésion partielle sur le ruban de protection.

Dès lors, la tête de dépose permet de déposer sur une surface de dépose un matériau se présentant sous la forme d'un ruban de fibres imprégnées. Un tel ruban peut par exemple avoir une largeur de 20 à 90 millimètres. En outre, les fibres du ruban de fibres imprégnées peuvent être des fibres de carbone, de basalte, de verre... De plus, ces fibres peuvent être imprégnées par voie humide ou par voie solvant.

Le ruban de protection est par exemple un film plastique de type polyuréthane ou polyéthylène. Ce ruban de protection assure la stabilité de la bobine de matière utilisée lors d'opérations de manutention et stockage, et assure aussi un débobinage correct sans blocage et enchevêtrement de fibres. Lors de l'opération de dépose, le ruban de protection facilite le guidage et l'entrainement du ruban de fibres imprégnées lors de son cheminement dans la tête de dépose en limitant les transferts de résine sur les pièces mécaniques de la tête de dépose.

Tant que le ruban de fibres imprégnées est accolé au ruban de protection, le ruban de protection est favorablement interposé entre le ruban de fibres imprégnées et les pièces mécaniques de la tête de dépose.

Le ruban de fibres imprégnées est séparé du ruban de protection lors d'une opération de pelage.

L'opération de pelage consiste à imposer au ruban de fibres imprégnées une trajectoire différente de la trajectoire suivie par le ruban de protection. Afin de maitriser dans l'espace le point de séparation du ruban de protection et du ruban de fibres imprégnées, le galet de pelage est tangent à la trajectoire suivie par l'ensemble comprenant le ruban de fibres imprégnées et le ruban de protection. Ce galet de pelage impose au ruban de protection de suivre une direction différente en sortie du galet de pelage de la direction suivie par le ruban de fibres imprégnées du fait des différents orientations de traction appliquées sur chacune des extrémités des brins mis en œuvre .

Dès lors, le ruban de protection chemine conjointement avec le ruban de fibres imprégnées jusqu'au galet de pelage, puis est évacué vers la bobine de récupération. A l'inverse, le ruban de fibres imprégnées peut poursuivre son cheminement jusqu'à la surface de dépose.

Une opération de pelage du ruban de protection peut produire un arrachement des fibres du ruban de fibres imprégnées qui restent collées contre le ruban de protection après l'opération de pelage. En effet du fait d'un transfert partiel de résine sur le ruban de protection, ce ruban de protection présente un caractère adhésif qui peut donc retenir des fibres du ruban de fibres imprégnées lors du pelage. Cet arrachement de fibres peut conduire à terme vers une dégradation complète du ruban de fibres imprégnées.

L'invention permet d'optimiser cette opération de pelage. En effet, le ruban de pelage décrit un arc de cercle contre le galet de pelage qui varie en fonction de la position du tiroir. La variation de la dimension de cet arc de cercle permet d'optimiser le pelage en fonction de la vitesse de déplacement de la tête de dépose, et donc de l'ensemble de rubans.

Pour éviter un arrachement des fibres, l'angle de l'arc de cercle décrit par le ruban de protection contre le galet de pelage ne doit pas dépasser une certaine valeur. Cette valeur d'angle diminue quand la vitesse de pelage et donc d'avancement de la tête de dépose augmente. L'expression « angle de l'arc de cercle » représente l'ouverture angulaire de cet arc de cercle.

Par exemple, si l'angle de l'arc de cercle décrit par le ruban de protection autour du galet de pelage est de l'ordre de 180°, la vitesse de déplacement peut être limitée à une faible valeur de vitesse, par exemple de l'ordre de moins de 0.15 mètre par seconde avec un galet de pelage ayant un rayon de un à deux centimètres.

A l'inverse et avec un tel galet de pelage, si l'angle de l'arc de cercle décrit par le ruban de protection autour du galet de pelage est de l'ordre de 60°, la vitesse de déplacement peut atteindre une vitesse importante, par exemple de l'ordre de 2 mètres par seconde.

Ainsi, le deuxième angle est inférieure ou égale à 60 degrés plus ou moins cinq degrés.

Le premier angle est supérieure ou égal à 90 degrés, et notamment égal à 180 degrés.

En outre, la longueur séparant le ruban de protection à la sortie du galet de pelage et d'une autre roue de la tête de dépose est en outre favorablement supérieure ou égale à 10 centimètres pour favoriser l'opération de pelage.

Par conséquent, le tiroir mobile permet d'amorcer une séquence de dépose du ruban de fibres imprégnées en étant déplacé dans la position inférieure. Dans cette position, la tête de dépose peut être déplacée à faible vitesse pour dérouler l'ensemble des rubans et déposer le ruban de fibres imprégnées sur la surface de dépose.

De plus, le tiroir mobile permet d'augmenter la vitesse de déplacement de la tête de dépose en étant déplacé dans la position supérieure. La cinématique du tiroir permet d'obtenir, durant la phase de dépose, une configuration géométrique assurant un pelage du ruban de protection à grande vitesse sans détérioration du ruban de fibres imprégnées.

Eventuellement, le tiroir peut aussi être positionné dans une position intermédiaire comprise entre la position inférieure et la position supérieure pour favoriser une étape de découpe.

La tête de dépose peut de plus comporter une ou plusieurs des caractéristiques qui suivent.

Ainsi, le moyen de désunion peut comporter au moins un galet intermédiaire agencé entre le galet de pelage et la bobine de récupération au regard du chemin suivi par le ruban de protection en allant vers la bobine de récupération.

Chaque galet intermédiaire permet de guider le ruban de protection vers la bobine de récupération.

Ledit au moins un galet intermédiaire peut inclure un premier galet intermédiaire et un deuxième galet intermédiaire, le premier galet intermédiaire étant disposé entre le deuxième galet intermédiaire et la bobine de récupération, le deuxième galet intermédiaire débouchant sur une ouverture d'un système de découpe.

L'expression « débouchant sur une ouverture » signifie qu'un ruban en contact sur le deuxième galet intermédiaire traverse l'ouverture sans toucher les bords de cette ouverture.

Le deuxième galet intermédiaire évite alors que le ruban de protection vienne en contact destructif avec le système de découpe lorsque le tiroir est dans sa position inférieure. Le premier galet intermédiaire assure la valeur du deuxième angle et sa stabilité pour l'opération de pelage en position supérieur.

Selon un autre aspect, le galet de pelage peut être agencé à une extrémité du tiroir.

Le tiroir s'étend selon sa longueur entre deux extrémités. En particulier, le galet de pelage est porté par l'extrémité du tiroir la plus proche de la surface de dépose. Dès lors, le galet de pelage peut aisément exercer une pression sur le ruban de fibres imprégnées dans la position inférieure du tiroir.

Selon un autre aspect, le tiroir peut porter une pince mobile par rapport au tiroir, un actionneur de pincement étant relié à la pince pour déplacer la pince d'une position de pincement vers une position de libération, la pince solidarisant en translation le ruban de fibres imprégnées au tiroir dans la position de pincement, la pince ne solidarisant pas en translation le ruban de fibres imprégnées au tiroir dans la position de libération.

L'expression « actionneur de pincement » désigne un actionneur apte à déplacer la pince en rotation. L'actionneur de pincement inclut par exemple un vérin hydraulique ou pneumatique, ou encore un vérin électrique.

Le tiroir est équipé d'une pince mécanique embarquée afin de bloquer le ruban de fibres imprégnées contre une surface aménagée spécialement pour cette fonction sur le tiroir durant la phase de translation de ce tiroir de la position supérieure à la position inférieure notamment.

Ainsi, lors de l'amorçage d'une séquence de dépose, la pince solidarise en translation le ruban de fibres imprégnées et le tiroir. Le tiroir peut ainsi correctement amener le ruban de fibres imprégnées vers la surface de dépose.

La surface aménagée sur le tiroir pour assurer le pincement du ruban peut par exemple être plane , lisse et revêtue d'un revêtement anti-adhésif tel que du téflon®.

Lorsque le tiroir atteint la position inférieure, la pince relâche alors le ruban de fibres imprégnées pour permettre le déplacement de la tête de dépose.

Eventuellement, la pince peut comporter une surface de pincement parallèle à une surface d'appui du tiroir dans la position de pincement.

Ce dispositif permet d'optimiser le blocage du ruban de fibres imprégnées contre la surface d'appui du tiroir.

La pince peut être mobile en rotation autour d'un axe de pincement parallèle à un axe de rotation du galet de pelage.

Cette caractéristique permet de déplacer aisément la pince.

Alternativement, la pince est mobile en translation, en étant animée par une cinématique adaptée et un actionneur.

Selon un autre aspect, le tiroir peut être mobile en rotation autour d'un axe de dégagement parallèle à un axe de rotation du galet de pelage.

Eventuellement, un actionneur de dégagement est relié au tiroir pour commander une rotation du tiroir autour de l'axe de dégagement.

L'expression « actionneur de dégagement » désigne un actionneur apte à déplacer le tiroir en rotation. L'actionneur de dégagement inclut par exemple un vérin hydraulique ou pneumatique, ou encore un vérin électrique.

Afin d'assurer la mise en pression du ruban de fibres imprégnées sur la surface de dépose, le tiroir est fixé sur le bâti de la tête de dépose par l'intermédiaire d'une articulation à pivot parallèle à l'axe de rotation du galet de pelage. Cette articulation à pivot permet donc un débattement angulaire du tiroir qui se traduit au niveau de galet de pelage en bout de tiroir par un débattement sensiblement vertical autorisant la mise en pression du ruban de fibres imprégnées contre la surface de dépose. L'actionneur de dégagement disposé entre le tiroir et le pivot assure l'application de l'effort de mise en pression.

Selon un autre aspect, le tiroir peut porter un système de chauffage.

Afin d'optimiser les conditions de pelage du ruban de protection, le tiroir peut être équipé d'un système de chauffage régulé et implanté dans le corps du tiroir à proximité du galet de pelage. Par exemple, le système de chauffage comporte une résistance électrique chauffante.

Selon un autre aspect, la tête de dépose peut comporter un système de découpe configuré pour découper le ruban de fibres imprégnées, le système de découpe comportant une ouverture traversée par le galet de pelage lors du déplacement du tiroir entre la position inférieure et la position supérieure.

Ce système de découpe permet de découper un ruban de fibres imprégnées à l'issue d'une séquence de dépose.

Par exemple, le système de découpe présente un plan de découpe et une lame animée par un vérin pneumatique afin de découper le ruban de fibres imprégnées. L'ouverture du système de découpe permet au tiroir de passer entre la lame et le plan de découpe.

Selon l'invention, a tête de dépose comporte un moyen de pression agencé en amont du galet de pelage dans la position inférieure du tiroir au regard d'un sens de déplacement de la tête de dépose lors d'une dépose du ruban de fibres imprégnées sur la surface de dépose.

Le moyen de pression peut comporter un rouleau ou encore un lissoir ayant une arête vive ou arrondie.

Par exemple, un lissoir du type décrit dans le document FR 2982792 est envisageable.

Par ailleurs, le moyen de pression est relié à un actionneur de compression pour être mobile entre une position de repos et une position de compression, la position de repos étant configurée pour que le moyen de pression ne presse pas le ruban de fibres imprégnées contre la surface de dépose, ladite position de compression étant configurée pour que le moyen de pression presse le ruban de fibres imprégnées contre la surface de dépose.

Par exemple, le moyen de pression est positionné dans la position de repos lors de la translation du tiroir de la position inférieure à la position supérieure. Ensuite, le moyen de pression est descendu dans sa position de compression pour appuyer sur le tronçon du ruban de fibres imprégnées déposé sur la surface de dépose.

L'invention concerne aussi un dispositif suivant la revendication 12 de placement d'un ruban de fibres imprégnées.

Par ailleurs, l'invention vise un procédé suivant la revendication 13 de placement d'un ruban de fibres imprégnées avec un tel dispositif de placement.

Durant la phase d'amorçage, le tiroir descend alors vers sa position inférieure pour positionner le ruban de fibres imprégnées contre la surface de dépose. L'angle d'enroulement du ruban de protection sur le galet de pelage est maximisé, en étant de l'ordre de 180° par exemple.

Dès lors, le système de déplacement déplace la tête de dépose à une vitesse faible de 0.1 m/s par exemple, sur une distance faible par exemple de l'ordre de 7 à 10 centimètres afin d'assurer une surface d'agrafage du ruban de fibres imprégnées sur la surface de dépose.

Durant une phase de dépose rapide, le tiroir remonte alors vers sa position supérieure. L'angle d'enroulement du ruban de protection sur le galet de pelage est minimisé, en étant de l'ordre de 60° par exemple. Le système de déplacement peut alors déplacer la tête de dépose à grande vitesse par exemple de 1 m/s.

Eventuellement, l'étape d'amorçage de la tête de dépose peut comporter les étapes suivantes :
- solidarisation en translation du ruban de fibres imprégnées et du tiroir,
- déplacement du tiroir dans la position inférieure,
- désolidarisation en translation du ruban de fibres imprégnées et du tiroir

Durant la phase d'amorçage, la pince serre le ruban de fibres imprégnées contre le tiroir. Le tiroir descend alors vers sa position inférieure pour positionner le ruban de fibres imprégnées contre la surface de dépose. L'angle d'enroulement du ruban de protection sur le galet de pelage est maximisé, en étant de l'ordre de 180° par exemple.

Dès lors, la pince est ouverte. Le système de déplacement peut ensuite déplacer la tête de dépose à une vitesse faible.

Selon l'invention, préalablement à un déplacement de la tête de dépose, le procédé comporte une étape de déplacement du moyen de pression pressant le ruban de fibres imprégnées contre la surface de dépose.

Eventuellement, le procédé peut comporter une phase de découpe du ruban de fibres imprégnés.

Favorablement, le ruban de protection n'est par contre pas coupé, notamment pour assurer le réamorçage après une découpe.

Durant cette phase de découpe, le tiroir est déplacé dans une position intermédiaire pour être disposé au plus près du système de découpe. Le tiroir est déplacé en translation pour positionner le galet de pelage à une distance prédéterminée du plan de découpe. La pince est le cas échéant fermée. Le système de découpe découpe alors le ruban de fibres imprégnées.

Durant une phase de transfert mise en œuvre entre deux séquences de dépose, le tiroir peut rester dans la position intermédiaire.

L'invention et ses avantages apparaîtront avec plus de détails dans le cadre de la description qui suit avec des exemples de réalisations donnés à titre illustratif en référence aux figures annexées qui représentent :
- la figure 1, un vue d'un dispositif de placement selon l'invention,
- la figure 2, un schéma présentant une tête de dépose selon l'invention, et
- les figures 3 à 7, des schémas explicitant le fonctionnement de l'invention.

Les éléments présents dans plusieurs figures distinctes sont affectés d'une seule et même référence.

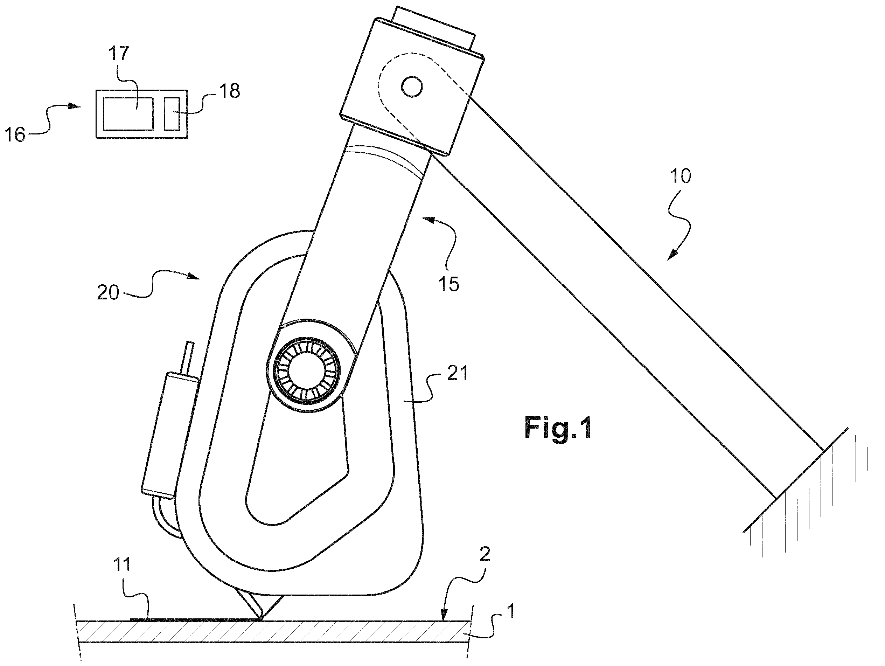

La figure 1 présente un dispositif 10 de placement de fibres sur une surface de dépose 2, telle qu'une surface d'un moule 1.

Plus particulièrement, le dispositif 10 permet de disposer un ruban de fibres imprégnées 11 sur cette surface de dépose 2. Le ruban de fibres imprégnées 11 peut comporter des fibres imprégnées par une résine par voie humide par exemple pour présenter une capacité importante d'adhérence à un support. Le ruban de fibres imprégnées 11 est alors un ruban pégueux présentant une pégosité élevée. Néanmoins, le ruban de fibres imprégnées 11 peut comporter des fibres imprégnées par une résine par voie solvant.

Ce dispositif 10 inclut une tête de dépose 20 et un système de déplacement 15 de la tête de dépose dans l'espace. La tête de dépose 20 comprend un bâti 21 porté par le système de déplacement 15. Ce système de déplacement 15 peut être un robot présentant des bras articulés, ou encore un portique apte à déplacer la tête de dépose selon plusieurs directions.

De plus, le dispositif 10 comporte un moyen de contrôle 16 de la tête de dépose 20 et du système de déplacement 15.

Le moyen de contrôle peut être pourvu d'une interface visuelle 17 et d'interfaces homme/machine 18 manœuvrables manuellement par un opérateur pour régler des paramètres de contrôle du dispositif 10. Par exemple, ces paramètres sont notamment relatifs au déplacement de la tête de dépose 20, à la coupe éventuelle de ce ruban de fibres imprégnées 11, à une température régnant dans la tête de dépose et à tout autre paramètre utile au fonctionnement du dispositif 10.

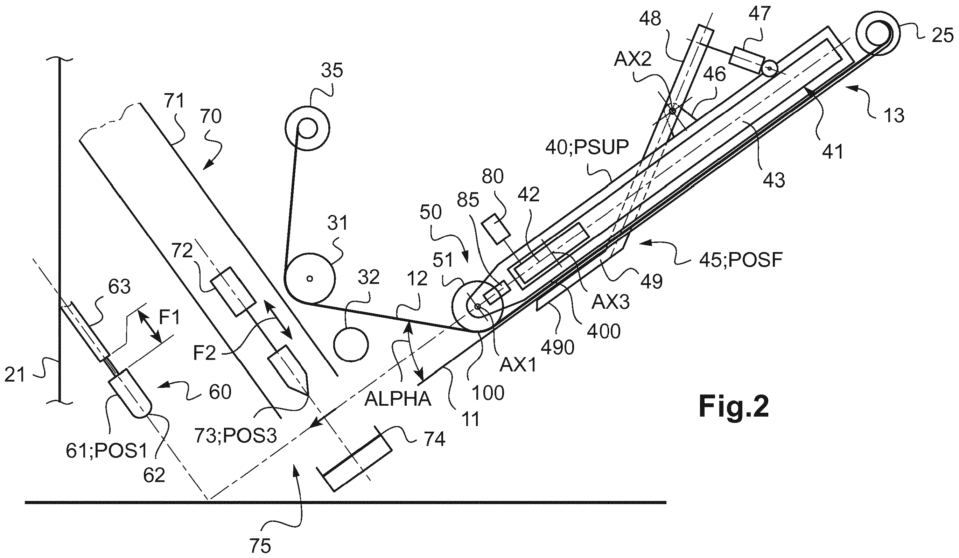

La figure 2 présente un schéma d'une réalisation de la tête de dépose 20.

Cette tête de dépose comprend un ensemble 13 de rubans cheminant dans le bâti 21. Cet ensemble 13 de rubans comporte un ruban de fibres imprégnées 11 superposé à un ruban de protection 12. L'ensemble 13 peut être stocké dans un système d'alimentation incluant notamment une bobine d'alimentation, voire un galet de renvoi. Ainsi, l'ensemble 13 est enroulé autour d'une âme d'une bobine d'alimentation 25 dite « âme d'alimentation ». La bobine d'alimentation peut être logée dans la tête de dépose 20, ou en dehors de cette tête de dépose 20.

Le cas échéant un galet de renvoi est disposé de façon à assurer que la trajectoire de l'ensemble 13 soit bien parallèle à une surface d'appui du tiroir décrit par la suite, quelle que soit le diamètre variable de la bobine d'alimentation 25 lors de la phase de dévidement de l'ensemble 13 de rubans.

Le ruban de protection 12 permet notamment de séparer deux couches successives du ruban de fibres imprégnées 11 pour par exemple autoriser le déroulement du ruban de fibres imprégnées 11 hors de la bobine d'alimentation 25.

A la sortie de la bobine d'alimentation 25, l'ensemble 13 de rubans longe tangentiellement une surface d'appui 400 d'un tiroir 40. Ce tiroir 40 s'étend longitudinalement d'une extrémité supérieure vers une extrémité inférieure. Le tiroir 40 porte un galet de pelage 51 d'un moyen de désunion 50. Par exemple, le galet de pelage est libre en rotation par rapport au tiroir 40 autour d'un axe de rotation AX1. Ce galet de pelage 51 peut ainsi être disposé autour d'une tige solidaire de l'extrémité inférieure du tiroir, la tige s'étendant selon l'axe de rotation AX1. A proximité du galet de pelage 51, le tiroir peut comporter un système de chauffage 85, tel qu'un système muni d'une résistance chauffante par exemple.

Le long du tiroir 40, l'ensemble 13 peut suivre une trajectoire rectiligne.

Eventuellement, le ruban de protection 12 est interposé entre le ruban de fibres imprégnées 11 et le tiroir 40.

Lorsque l'ensemble 13 de rubans atteint le galet de pelage 51, le ruban de protection est dirigé vers une bobine de récupération 35 en étant accolé contre un arc de cercle du galet de pelage 51.

Eventuellement, au moins un galet intermédiaire 31, 32 guide le ruban de protection 12 vers la bobine de récupération 35. Chaque galet intermédiaire 31, 32 est alors interposé entre le galet de pelage 51 et ladite bobine de récupération 35 au regard du chemin suivi par le ruban de protection 12 en allant vers la bobine de récupération 35.

Par exemple, un premier galet intermédiaire 31 et un deuxième galet intermédiaire 32 sont prévus. Le premier galet intermédiaire 31 est disposé fonctionnellement entre le deuxième galet intermédiaire 32 et la bobine de récupération 35. Le deuxième galet intermédiaire 32 est disposé à proximité d'une ouverture d'un système de découpe décrit par la suite pour éviter que le ruban de protection 12 vienne en contact destructif avec le système de découpe 3 lorsque le tiroir est dans sa position inférieure PINF.

Ainsi, le ruban de protection 12 peut éventuellement passer en permanence contre le premier galet intermédiaire 31, et éventuellement contre le deuxième galet intermédiaire 32 agencé entre le premier galet intermédiaire 31 et le galet de pelage 51 dans certaines conditions. En particulier, le ruban passe contre le deuxième galet intermédiaire lorsque le tiroir n'est pas dans sa position supérieure PSUP.

A l'inverse, le ruban de fibres imprégnés 11 ne tourne pas autour du deuxième galet intermédiaire pour atteindre la bobine de récupération 35 lorsque le tiroir est dans sa position supérieure PSUP.

Par suite, le moyen de désunion 50 comprend un galet de pelage 51 guidant le ruban de protection 12 vers une bobine de récupération 35 tout en n'influant pas le cheminement du ruban de fibres imprégnées 11. Pour rejoindre la bobine de récupération 35, le ruban de protection 12 doit réaliser un changement de direction de manière à présenter un angle alpha avec le ruban de fibres imprégnées 11. Dès lors, le ruban de protection 12 se sépare du ruban de fibres imprégnées 11.

Selon une variante, un ruban additionnel enroulé autour d'une bobine additionnelle est de plus interposé entre d'une part le ruban de protection 12 et, d'autre part, le tiroir 40 et le moyen de désunion 50. Par exemple, la bobine additionnelle est placée entre la bobine d'alimentation 25 et le tiroir 40 au regard du déplacement de l'ensemble 13 de rubans. Le ruban additionnel ainsi que le ruban de protection 12 et le ruban de fibres imprégnées 11 sont dirigés conjointement vers le tiroir 40, le ruban additionnel et le ruban de protection étant ensuite guidés vers la bobine de récupération 35.

En effet, au sein de la bobine d'alimentation 25, une couche de ruban de protection 12 est disposée entre deux couches du ruban de fibres imprégnées 11. Classiquement, les rubans de protection sont réalisés en une matière évitant une forte adhésion avec les fibres imprégnées, telle que du papier siliconé ou un film plastique structuré par exemple. Cependant, la face du ruban de protection en contact avec les organes de la tête de dépose peut conserver des traces de son enroulement autour de l'âme d'alimentation, et par suite des traces de résine. Le ruban additionnel est alors utilisé pour éviter un encrassement de la tête de dépose.

A l'inverse du ruban de protection et le cas échéant du ruban additionnel, le ruban de fibres imprégnées 11 n'est pas dévié, et poursuit son cheminement vers la surface de dépose 2 sur laquelle ce ruban de fibres imprégnées 11 doit être déposé.

Le ruban de fibres imprégnées 11 est alors dirigé vers un moyen de pression 61, le moyen de pression 61 étant de fait agencé en aval du galet de pelage 51 au regard du sens de déplacement du ruban de fibres imprégnées dans le bâti 21 de la tête de dépose. Dès lors, le moyen de pression 61 n'est en contact ni avec le ruban de protection 12 ni avec le ruban additionnel le cas échéant.

Le moyen de pression 61 peut par exemple comprendre une roulette apte à exercer une pression sur le ruban de fibres imprégnées déposé sur la surface de dépose 2.

De manière alternative, le moyen de pression 61 peut comprendre un lissoir 60 muni d'une arête 62 vive ou arrondie appuyant sur le ruban de fibres imprégnées 11 pour son application contre la surface de dépose 2. Le lissoir est alors en contact avec le ruban de fibres imprégnées uniquement sur une surface très limitée, à savoir la surface de l'arête 62.

La tête de dépose peut comprendre un actionneur de compression 63 apte à déplacer le moyen de pression 61. Dès lors, l'actionneur de compression 63 peut être fixé au bâti 21, le moyen de pression 61 étant au contraire mobile par rapport au bâti. Par exemple, le moyen de pression 61 est déplacé en translation sensiblement verticalement conformément à la double flèche F1.

L'actionneur de compression 63 peut déplacer le moyen de pression 61 d'une position dite « position de repos POS1 » vers une position dite « position de compression ». Dans la position de repos POS1, le moyen de pression 61 ne peut pas presser le ruban de fibres imprégnées 11 contre la surface de dépose 2. A l'inverse, dans la position de compression le moyen de pression 61 presse le ruban de fibres imprégnées 11 contre la surface de dépose 2 en exerçant une pression de lissage.

L'actionneur de compression 63 permet aussi de régler avec précision la pression exercée par le moyen de pression 61 sur le ruban de fibres imprégnées 11 dans la position de compression. Par exemple, un opérateur règle la pression à respecter à l'aide du moyen de contrôle 16, ce moyen de contrôle 16 asservissant l'effort de compression du moyen de pression 61 à l'aide de capteurs non représentés par exemple.

Selon un autre aspect, la tête de dépose 20 peut comprendre un système de découpe 70 pour découper le ruban de fibres imprégnées 11. Le système de découpe 70 est agencé le cas échéant en amont du moyen de pression 61 au regard du sens de déplacement du ruban de fibres imprégnées dans le bâti 21 de la tête de dépose 20.

Ce système de découpe 70 peut posséder un carter 71 fixé au bâti 21. Dans ce carter 71, le système de découpe 70 comporte une lame 73 coopérant avec un vérin 72. Le vérin 72 peut déplacer en translation la lame 73 dans le carter pour diriger la lame 73 vers un plan de coupe 74. Le plan de coupe 74 représente alors une cale « martyre ».

Le système de découpe 70 peut ainsi couper le ruban de fibres imprégnées 11 sur requête du moyen de contrôle 16 en déplaçant la lame 73 selon la double flèche F2 contre le plan de coupe 74.

Le système de découpe 70 possède en outre une ouverture 75 permettant au tiroir 40 de traverser ce système de découpe 70 pour se rapprocher de la surface de dépose 2.

En effet, le tiroir 40 est mobile au moins en translation d'une position supérieure PSUP visible sur la figure 2 à une position inférieure illustrée par la suite. Dans la position supérieure PSUP, le tiroir est agencé en amont du système de découpe 70 au regard du sens de déplacement du ruban de fibres imprégnées dans le bâti 21 de la tête de dépose 20. Par contre, pour passer de la position supérieure PSUP à la position inférieure, le tiroir traverse alors le cas échéant l'ouverture 75 du système de découpe 70. Eventuellement, un deuxième galet intermédiaire 32 est positionné près de l'ouverture 75 pour guider le ruban de protection 12 suite à la translation du tiroir 40 vers la position inférieure.

Pour déplacer le tiroir 40 en translation, la tête de dépose 20 comporte un actionneur de déplacement 41 relié au tiroir 40.

Selon l'exemple schématisé sur la figure 2, l'actionneur de déplacement comporte une cavité 43 ménagée dans le tiroir et un piston 42 disposé dans la cavité.

Le piston 42 délimite au moins une chambre à volume variable dans la cavité 43, voire deux chambres disposées de part et d'autre du piston 42. Lorsque la pression régnant dans au moins une chambre est modifiée à l'aide d'un système hydraulique ou pneumatique, le tiroir se déplace par rapport au piston 42.

Le piston 42 est porté par le bâti 21 et supporte alors le tiroir 40. De plus, le piston 42 guide en translation le tiroir 40.

Selon un autre aspect, le tiroir 40 peut aussi être mobile en rotation autour d'un axe de dégagement AX3. Cet axe de dégagement AX3 est parallèle à l'axe de rotation AX1 du galet de pelage 51.

Dès lors, un actionneur dit « actionneur de dégagement 80 » est relié au tiroir 40 pour commander une rotation de ce tiroir 40 autour de l'axe de dégagement AX3.

Par exemple, le tiroir 40 et le piston 42 tournent autour d'un axe de symétrie du piston, ce piston étant articulé au bâti 21.

Selon une autre variante, le système comporte le piston 42 qui est agencé dans la cavité 43 pour porter le tiroir et guider la translation de ce tiroir. Tout type d'actionneur susceptible de déplacer le tiroir au moins en translation peut être utilisé en complément. Par exemple, l'actionneur de déplacement peut comprendre un vérin électrique ou hydraulique ou pneumatique par exemple muni d'une tige reliée au tiroir, l'actionneur de déplacement déplaçant la tige en translation ou en rotation par rapport au bâti 21.

Le piston 42 et la cavité 43 peuvent former une glissière à bille monté sur un pivot agencé selon l'axe de dégagement AX3.

L'actionneur de déplacement représente alors aussi un actionneur de dégagement 80 en assurant par sa cinématique le déplacement en translation et en rotation du tiroir.

Selon un autre aspect, ledit tiroir 40 peut porter une pince 45. La pince 45 est mobile par rapport au tiroir 40.

Par exemple, la pince 45 est mobile en rotation. Dès lors, la pince 45 est articulée au tiroir par une articulation à pivot 46. En particulier, la pince 45 peut être mobile en rotation autour d'un axe dit « axe de pincement AX2 » qui est parallèle à l'axe de rotation AX1 du galet de pelage 51 sur lui-même.

Par exemple, la pince 45 comporte un premier bras 48 articulé à l'articulation à pivot 46, et un deuxième bras 49 solidaire du premier bras 48. Le deuxième bras 49 est alors situé en regard de la face d'appui 400 du tiroir 40. Plus précisément, la pince 45, et par exemple le deuxième bras 49, comportent une surface de pincement 490 sensiblement parallèle à la surface d'appui 400 du tiroir 40 dans une position de pincement POSF illustrée sur la figure 2.

En outre, la tête de dépose 20 comporte un actionneur de pincement 47. Cet actionneur de pincement 47 s'étend entre le tiroir 40 et la pince 45, par exemple entre le tiroir 40 et le premier bras 48. Cet actionneur de pincement 47 est configuré pour déplacer la pince 45 de la position de pincement POSF vers une position de libération POSO. Dans la position de pincement POSF, la pince 45 solidarise en translation le ruban de fibres imprégnées 11 au tiroir 40, en coinçant un tronçon de l'ensemble 13 de rubans entre sa surface de pincement 490 et la surface d'appui 400 du tiroir. Par contre, dans la position de libération POSO, la pince 45 ne solidarise pas en translation l'ensemble 13 de rubans au tiroir 40.

Selon une autre variante, la pince 45 est mobile en translation, animée par une cinématique adaptée et un actionneur.

Les figures 2 à 7 illustrent le fonctionnement de la tête de dépose.

Avant le début d'une séquence de dépose d'un ruban de fibres imprégnées 11 programmée dans le moyen de contrôle 16, le tiroir 40 se trouve dans sa position supérieure PSUP ou dans sa position intermédiaire. Le cas échéant, la pince 45 est amenée dans sa position de pincement POSF. Le moyen de pression 61 est dans sa position de repos POS1, et la lame 73 du système de découpe 70 est remontée.

Pour amorcer la tête de dépose, l'actionneur de déplacement 41 déplace en translation vers le bas le tiroir 40. Le déplacement de l'ensemble 13 de rubans conjointement avec le tiroir 40 est facilité par la pince 45 qui solidarise cet ensemble 13 au tiroir 40.

Dès lors, la tête de dépose est déplacée vers la surface de dépose selon un mouvement en élévation de haut en bas.

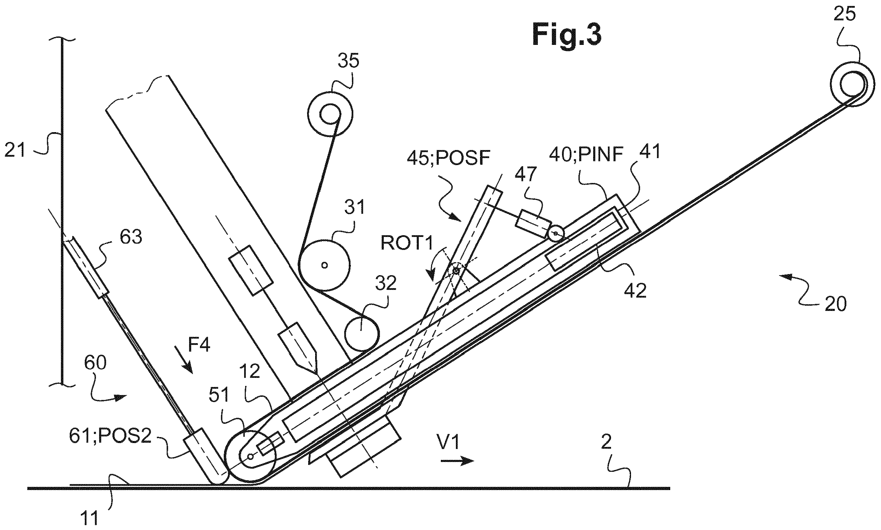

En référence à la figure 3, le tiroir traverse alors de part en part le système de découpe 70 pour atteindre sa position inférieure PINF. Le ruban de fibres imprégnées 11 comporte un tronçon qui repose alors sur la surface de dépose. Ce tronçon est maintenu contre la surface de dépose par le galet de pelage 51.

De plus, le ruban de protection passe alors contre le deuxième galet intermédiaire 32. Ce deuxième galet intermédiaire évite un contact indu entre le système de découpe et le ruban de protection 12 en aval du galet de pelage. Le ruban passe par une tangente au deuxième galet intermédiaire et au galet de pelage qui traverse l'ouverture 70 dans la position inférieure du tiroir.

Le cas échéant et sur ordre du moyen de contrôle 16, l'actionneur de compression 63 déplace en translation le moyen de pression 61 dans sa position de compression POS2 selon la flèche F4 pour appuyer sur ce tronçon.

De plus, l'actionneur de pincement 47 fait effectuer une rotation ROT1 à la pince 45 pour positionner la pince 45 dans sa position de libération POSO.

Par ailleurs, le ruban de protection 12 rejoint la bobine de récupération 35 en passant successivement autour du galet de pelage 51, du deuxième galet intermédiaire 32 puis du premier galet intermédiaire 31.

Dès lors, la tête de dépose 20 est déplacée par le système de déplacement sur ordre du moyen de contrôle 16, à une première vitesse V1. L'ensemble 13 de rubans est déroulé hors de la bobine d'alimentation 25, et le ruban de fibres imprégnées est étalé contre la surface de dépose.

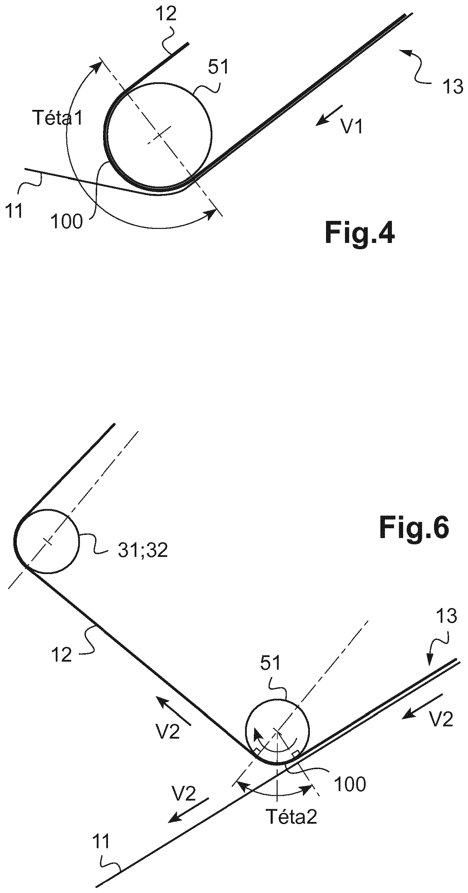

En référence à la figure 4, lorsque le tiroir 40 est dans sa position inférieure PINF, le ruban de protection 12 s'étale contre le galet de pelage 51 sur un arc de cercle 100 qui s'étend sur un premier angle teta1. Ce premier angle teta1 est de l'ordre de 180 degrés.

Dès lors, la première vitesse V1 est faible.

Lorsque la tête de dépose 20 a parcouru une distance préprogrammée dans le moyen de contrôle 16, ce moyen de contrôle immobilise la tête de dépose 20 avant de débuter une phase de déplacement rapide.

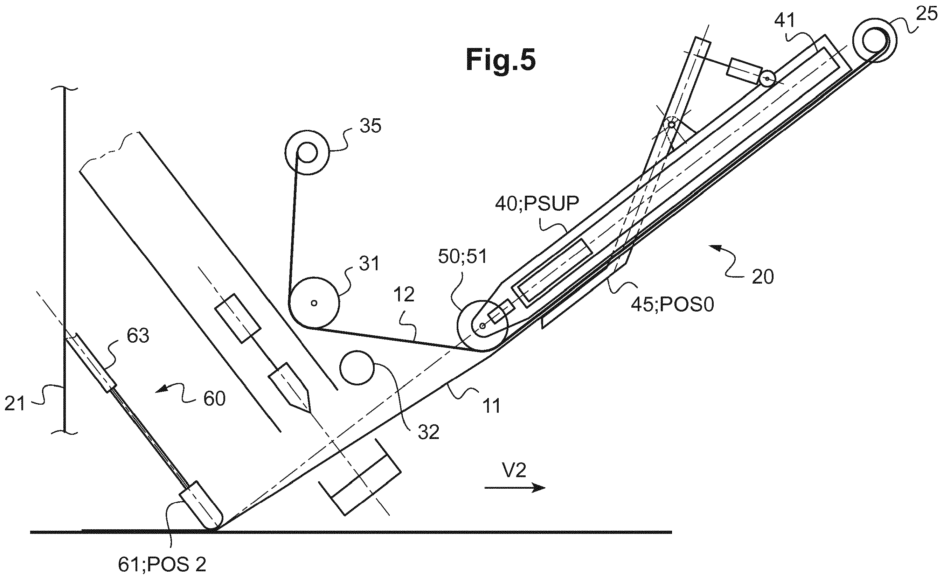

En référence à la figure 5, le moyen de contrôle 16 ordonne à l'actionneur de déplacement 41 de déplacer en translation le tiroir 40 vers sa position supérieure PSUP. Le cas échéant, le moyen de contrôle 16 ordonne à l'actionneur de dégagement 80 de déplacer en rotation le tiroir 40 autour de l'axe de dégagement AX3 en rapprochant le galet de pelage 51 de la bobine de récupération 35.

En référence à la figure 6, lorsque le tiroir 40 est dans sa position supérieure PSUP, le ruban de protection 12 s'étale contre le galet de pelage 51 sur un arc de cercle 100 qui s'étend sur un deuxième angle teta2. Ce deuxième angle teta2 est inférieur au premier angle teta1.

Ce deuxième angle teta2 est par exemple inférieur ou égal à 60 degrés plus ou moins cinq degrés. Un tel deuxième angle teta2 permet un pelage correct du ruban de protection 12.

Dès lors, la tête de dépose 20 peut être déplacée à une deuxième vitesse V2 importante par le système de déplacement.

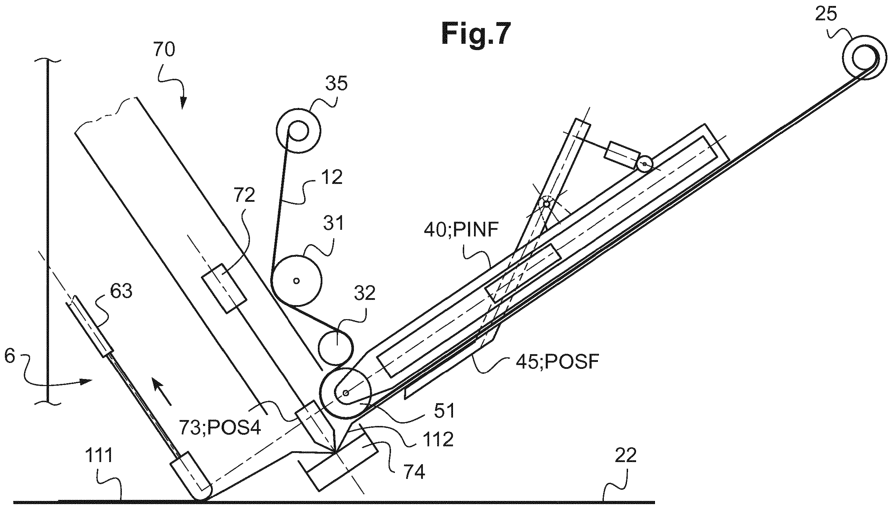

A l'issue de la séquence de dépose et en référence à la figure 7, le moyen de contrôle 16 ordonne le cas échéant à l'actionneur de dégagement 80 de déplacer en rotation le tiroir 40 autour de l'axe de dégagement AX3 pour ramener le tiroir 40 dans sa position précédente en alignant le tiroir avec l'ouverture 75 du système de découpe 70.

En outre, le moyen de contrôle 16 peut ordonner à l'actionneur de déplacement 41 de déplacer en translation le tiroir 40 vers sa position intermédiaire PINT.

De plus, le moyen de contrôle 16 peut ordonner à l'actionneur de pincement 47 de faire effectuer une rotation à la pince 45 pour positionner cette pince 45 dans sa position de pincement POSF.

Le système de découpe 70 est alors sollicité par le moyen de contrôle 16. La lame 73 se déplace en translation pour couper le ruban de fibres imprégnés 11. Un premier bout 111 coupé du ruban de fibres imprégnées est alors désolidarisé du tiroir. Un deuxième bout 112 coupé du ruban de fibres imprégnées saille du galet de pelage 51.

La tête de dépose 20 est éventuellement déplacée en translation pour que le moyen de pression 61 presse ce premier bout 111 coupé du ruban de fibres imprégnées sur la surface de dépose 2.

Le moyen de contrôle 16 peut ordonner à l'actionneur de compression 63 de remonter le moyen de pression dans sa position de repos POS1. De plus, l'actionneur de déplacement peut ramener le tiroir 40 dans sa position supérieure PSUP.

La tête de dépose peut alors être déplacée pour initier une nouvelle séquence de dépose.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention tel que défini par l'étendue des revendications.

## Revendications

1. Tête de dépose (20) pour déposer un ruban de fibres imprégnées (11), la tête de dépose étant munie d'un ensemble (13) comprenant ledit ruban de fibres imprégnées (11) disposé sur un ruban de protection (12), ladite tête de dépose (20) comportant une bobine de récupération (35) dudit ruban de protection (12) ainsi qu'un moyen de désunion (50) pour désunir le ruban de fibres imprégnées (11) et le ruban de protection (12), ladite tête de dépose (20) comportant un tiroir (40) et un actionneur de déplacement (41) relié au tiroir (40) pour déplacer en translation le tiroir (40) d'une position supérieure (PSUP) à une position inférieure (PINF), ledit tiroir (40) portant un galet de pelage (51) du moyen de désunion (50), ledit ruban de protection (12) s'étendant sur un arc de cercle (100) contre le galet de pelage (51) pour rejoindre ladite bobine de récupération (35), ladite position inférieure (PINF) étant configurée pour que ledit galet de pelage (51) presse ledit ruban de fibres imprégnées (11) contre une surface de dépose (2) uniquement dans la position inférieure (PINF) du tiroir (40), ledit arc de cercle (100) couvrant un premier angle (teta1) dans la position inférieure (PINF) du tiroir (40) et un deuxième angle (teta2) dans la position supérieure (PSUP) du tiroir (40),
ledit premier angle (teta1) étant supérieur audit deuxième angle (teta2) ; le deuxième angle (teta2) est inférieur ou égal à 60 degrés plus ou moins cinq degrés et
ladite tête de dépose est **caractérisée en ce que**
le premier angle (teta1) est supérieur ou égal à 90 degrés ; et **en ce que** ladite tête de dépose (20) comporte un moyen de pression (61) agencé en amont du galet de pelage (51) dans la position inférieure (PINF) du tiroir (40) au regard d'un sens de déplacement de la tête de dépose (20) lors d'une dépose du ruban de fibres imprégnées (11) sur la surface de dépose (2).

2. Tête de dépose (20) selon la revendication 1,
**caractérisée en ce que** ledit moyen de désunion (50) comporte au moins un galet intermédiaire (31, 32) agencé entre le galet de pelage (51) et ladite bobine de récupération (35) au regard du chemin suivi par le ruban de protection (12) en allant vers la bobine de récupération (35).

3. Tête de dépose (20) selon la revendication 2,
**caractérisée en ce que** ledit au moins un galet intermédiaire (31, 32) inclut un premier galet intermédiaire (31) et un deuxième galet intermédiaire (32), le premier galet intermédiaire (31) étant disposé entre le deuxième galet intermédiaire (32) et la bobine de récupération (35), le deuxième galet intermédiaire (32) débouchant sur une ouverture (75) d'un système de découpe (70), le deuxième galet intermédiaire évitant que le ruban de protection vienne en contact destructif avec le système de découpe lorsque le tiroir est dans la position inférieure.

4. Tête de dépose (20) selon l'une quelconque des revendications 1 à 3,
**caractérisée en ce que** ledit galet de pelage (51) est agencé à une extrémité dudit tiroir (40).

5. Tête de dépose (20) selon l'une quelconque des revendications 1 à 4,
**caractérisée en ce que** ledit tiroir (40) porte une pince (45) mobile par rapport au tiroir (40), un actionneur de pincement (47) étant relié à ladite pince (45) pour déplacer la pince (45) d'une position de pincement (POSF) vers une position de libération (POSO), la pince (45) solidarisant en translation ledit ruban de fibres imprégnées (11) au tiroir (40) dans la position de pincement (POSF), la pince (45) ne solidarisant pas en translation ledit ruban de fibres imprégnées (11) au tiroir (40) dans la position de libération (POSO).

6. Tête de dépose (20) selon la revendication 5,
**caractérisée en ce que** ladite pince (45) comporte une surface de pincement (490) parallèle à une surface d'appui (400) du tiroir (40) dans la position de pincement (POSF).

7. Tête de dépose (20) selon l'une quelconque des revendications 5 à 6,
**caractérisée en ce que** ladite pince (45) est mobile en rotation autour d'un axe de pincement (AX2) parallèle à un axe de rotation (AX1) du galet de pelage (51).

8. Tête de dépose (20) selon l'une quelconque des revendications 1 à 7,
**caractérisée en ce que** ledit tiroir (40) est mobile en rotation autour d'un axe de dégagement (AX3) parallèle à un axe de rotation (AX1) du galet de pelage (51).

9. Tête de dépose (20) selon l'une quelconque des revendications 1 à 8,
**caractérisée en ce que** ledit tiroir (40) porte un système de chauffage (85).

10. Tête de dépose (20) selon l'une quelconque des revendications 1 à 9,
**caractérisée en ce que** ladite tête de dépose (20) comporte un système de découpe (70) configuré pour découper ledit ruban de fibres imprégnées (11), ledit système de découpe (70) comportant une ouverture (75) traversée par ledit galet de pelage (51) lors du déplacement du tiroir (40) entre la position inférieure (PINF) et la position supérieure (PSUP).

11. Tête de dépose (20) selon l'une quelconque des revendications 1 à 10,
**caractérisée en ce que** ledit moyen de pression (61) est relié à un actionneur de compression (63) pour être mobile entre une position de repos (POS1) et une position de compression (POS2), ladite position de repos (POS1) étant configurée pour que le moyen de pression (61) ne presse pas le ruban de fibres imprégnées (11) contre la surface de dépose (2), ladite position de compression (POS2) étant configurée pour que le moyen de pression (61) presse le ruban de fibres imprégnées (11) contre la surface de dépose (2).

12. Dispositif (10) de placement d'un ruban de fibres imprégnées (11) muni d'une tête de dépose (20), d'un système de déplacement (15) et d'un moyen de contrôle (16) dudit système de déplacement (15) et de ladite tête de dépose (20),
**caractérisé en ce que** ladite tête de dépose (20) est selon l'une quelconque des revendications 1 à 11.

13. Procédé de placement d'un ruban de fibres imprégnées (11) avec un dispositif de placement (10) selon la revendication 12 comportant les étapes suivantes :
- amorçage de la tête de dépose (20) en déplaçant le tiroir (40) dans la position inférieure (PINF) pour presser le ruban de fibres imprégnées (11) contre la surface de dépose (2) avec le galet de pelage (51),
- déplacement de la tête de dépose (20) à une première vitesse (V1),
- arrêt de la tête de dépose (20),
- déplacement du tiroir (40) dans la position supérieure (PSUP),
- déplacement de la tête de dépose (20) à une deuxième vitesse (V2) supérieure à la première vitesse (V1) ;
et en ce que préalablement à un déplacement de la tête de dépose (20), le procédé comporte une étape de déplacement du moyen de pression (61) pressant ledit ruban de fibres imprégnées (11) contre la surface de dépose (2).

14. Procédé (10) de placement selon la revendication 13,
**caractérisé en ce que** l'étape d'amorçage de la tête de dépose comporte les étapes suivantes :
- solidarisation en translation du ruban de fibres imprégnées (11) et du tiroir (40),
- déplacement du tiroir (40) dans la position inférieure (PINF),
- désolidarisation en translation du ruban de fibres imprégnées (11) et du tiroir (40).

## Patentansprüche

1. Ablagekopf (20) zum Ablegen eines imprägnierten Faserbandes (11), wobei der Ablagekopf mit einer Einheit (13) versehen ist, die das auf einem Schutzband (12) angeordnete imprägnierte Faserband (11) umfasst, wobei der Ablagekopf (20) eine Aufwickelspule (35) für das Schutzband (12) sowie eine Trenneinrichtung (50) zum Trennen des imprägnierten Faserbandes (11) und des Schutzbandes (12) umfasst, wobei der Ablagekopf (20) einen Schieber (40) und ein mit dem Schieber (40) verbundenes Verschiebebetätigungselement (41) zum Verschieben des Schiebers (40) von einer oberen Position (PSUP) in eine untere Position (PINF) umfasst, wobei der Schieber (40) eine Schälrolle (51) der Trenneinrichtung (50) trägt, wobei sich das Schutzband (12) an der Schälrolle (51) über einen Kreisbogen (100) erstreckt, um die Aufwickelspule (35) zu erreichen, wobei die untere Position (PINF) so konfiguriert ist, dass die Schälrolle (51) das imprägnierte Faserband (11) nur in der unteren Position (PINF) des Schiebers (40) gegen eine Ablagefläche (2) drückt, wobei der Kreisbogen (100) sich in der unteren Position (PINF) des Schiebers (40) über einen ersten Winkel (tetal) und in der oberen Position (PSUP) des Schiebers (40) über einen zweiten Winkel (teta2) erstreckt,
der erste Winkel (teta1) größer ist als der zweite Winkel (teta2); der zweite Winkel (teta2) kleiner oder gleich 60 Grad plus oder minus fünf Grad ist, und der Ablagekopf **dadurch gekennzeichnet ist, dass** der erste Winkel (teta1) größer oder gleich 90 Grad ist;
und dass der Ablagekopf (20) eine Andrückeinrichtung (61) umfasst, die beim Ablegen des imprägnierten Faserbandes (11) auf die Ablagefläche (2) in der unteren Position (PINF) der Spule (40) in Bezug auf eine Bewegungsrichtung des Ablagekopfes (20) stromaufwärts der Schälrolle (51) angeordnet ist.

2. Ablagekopf (20) nach Anspruch 1,
**dadurch gekennzeichnet, dass** die Trenneinrichtung (50) mindestens eine Zwischenrolle (31, 32) umfasst, die in Bezug auf den Weg, dem das Schutzband (12) auf dem Weg zur Aufwickelspule (35) folgt, zwischen der Schälrolle (51) und der Aufwickelspule (35) angeordnet ist.

3. Ablagekopf (20) nach Anspruch 2,
**dadurch gekennzeichnet, dass** die mindestens eine Zwischenrolle (31, 32) eine erste Zwischenrolle (31) und eine zweite Zwischenrolle (32) umfasst, wobei die erste Zwischenrolle (31) zwischen der zweiten Zwischenrolle (32) und der Aufwickelspule (35) angeordnet ist, wobei die zweite Zwischenrolle (32) in eine Öffnung (75) eines Schneidsystems (70) mündet, wobei die zweite Zwischenrolle verhindert, dass das Schutzband in zerstörenden Kontakt mit dem Schneidsystem kommt, wenn sich der Schieber in der unteren Position befindet.

4. Ablagekopf (20) nach einem der Ansprüche 1 bis 3,
**dadurch gekennzeichnet, dass** die Schälrolle (51) an einem Ende des Schiebers (40) angeordnet ist.

5. Ablagekopf (20) nach einem der Ansprüche 1 bis 4,
**dadurch gekennzeichnet, dass** der Schieber (40) eine Klemme (45) trägt, die relativ zu dem Schieber (40) beweglich ist, wobei ein Klemmbetätigungselement (47) mit der Klemme (45) verbunden ist, um die Klemme (45) von einer Klemmposition (POSF) in eine Freigabeposition (POSO) zu bewegen, wobei in der Klemmposition (POSF) die Klemme (45) das imprägnierte Faserband (11) in Translation fest mit dem Schieber (40) verbindet und in der Freigabeposition (POSO) die Klemme (45) das imprägnierte Faserband (11) nicht in Translation fest mit dem Schieber (40) verbindet.

6. Ablagekopf (20) nach Anspruch 5,
**dadurch gekennzeichnet, dass** die Klemme (45) eine Klemmfläche (490) parallel zu einer Auflagefläche (400) des Schiebers (40) in der Klemmposition (POSF) aufweist.

7. Ablagekopf (20) nach einem der Ansprüche 5 bis 6,
**dadurch gekennzeichnet, dass** die Klemme (45) um eine zu einer Drehachse (AX1) der Schälrolle (51) parallele Klemmachse (AX2) drehbar ist.

8. Ablagekopf (20) nach einem der Ansprüche 1 bis 7 ,
**dadurch gekennzeichnet, dass** der Schieber (40) um eine zu einer Drehachse (AX1) der Schälrolle (51) parallele Freigabeachse (AX3) drehbar ist.

9. Ablagekopf (20) nach einem der Ansprüche 1 bis 8,
**dadurch gekennzeichnet, dass** der Schieber (40) ein Heizsystem (85) trägt.

10. Ablagekopf (20) nach einem der Ansprüche 1 bis 9,
**dadurch gekennzeichnet, dass** der Ablagekopf (20) ein Schneidsystem (70) umfasst, das konfiguriert ist, um das imprägnierte Faserband (11) zu schneiden, wobei das Schneidsystem (70) eine Öffnung (75) umfasst, die während der Bewegung des Schiebers (40) zwischen der unteren Position (PINF) und der oberen Position (PSUP) von der Schälrolle (51) durchlaufen wird.

11. Ablagekopf (20) nach einem der Ansprüche 1 bis 10,
**dadurch gekennzeichnet, dass** die Andrückeinrichtung (61) mit einem Kompressionsstellglied (63) verbunden ist, um zwischen einer Ruheposition (POS1) und einer Kompressionsposition (POS2) beweglich zu sein, wobei die Ruheposition (POS1) so konfiguriert ist, dass die Andrückeinrichtung (61) das imprägnierte Faserband (11) nicht gegen die Ablagefläche (2) drückt, und die Kompressionsposition (POS2) so konfiguriert ist, dass die Andrückeinrichtung (61) das imprägnierte Faserband (11) gegen die Ablagefläche (2) drückt.

12. Ablegevorrichtung (10) zum Ablegen eines imprägnierten Faserbandes (11), mit einem Ablagekopf (20), einem Verstellsystem (15) und Steuermitteln (16) für das Verstellsystem (15) und den Ablagekopf (20),
**dadurch gekennzeichnet, dass** der Ablagekopf (20) nach einem der Ansprüche 1 bis 11 ausgeführt ist.

13. Verfahren zum Ablegen eines imprägnierten Faserbandes (11) mit einer Ablegevorrichtung (10) nach Anspruch 12, umfassend die folgenden Schritte:
- Anfahren des Ablagekopfes (20) durch Bewegen der Spule (40) in die untere Position (PINF), um das imprägnierte Faserband (11) mit der Schälrolle (51) gegen die Ablagefläche (2) zu drücken,
- Bewegen des Ablagekopfes (20) mit einer ersten Geschwindigkeit (V1),
- Anhalten des Ablagekopfes (20),
- Bewegen des Schiebers (40) in die obere Position (PSUP),
- Bewegen des Ablagekopfes (20) mit einer zweiten Geschwindigkeit (V2), die höher ist als die erste Geschwindigkeit (V1);
und dass das Verfahren vor einem Bewegen des Ablagekopfes (20) einen Schritt des Bewegens der Andrückeinrichtung (61) umfasst, der das imprägnierte Faserband (11) gegen die Ablagefläche (2) drückt.

14. Verfahren (10) zum Ablegen nach Anspruch 13,
**dadurch gekennzeichnet, dass** der Schritt des Anfahrens des Ablagekopfes die folgenden Schritte umfasst:
- translatorisches Verbinden des imprägnierten Faserbandes (11) und des Schiebers (40),
- Bewegen des Schiebers (40) in die untere Position (PINF),
- translatorisches Trennen des imprägnierten Faserbandes (11) und des Schiebers (40).

## Claims

1. Deposition head (20) for depositing a tape of impregnated fibres (11), the deposition head (20) being equipped with an assemblage (13) comprising said tape of impregnated fibres (11) arranged on a backing tape (12), said deposition head (20) including a recovery spool (35) for recovering said backing tape (12) and parting means (50) for parting the tape of impregnated fibres (11) from the backing tape (12), said deposition head (20) including a slide (40) and a movement actuator (41) connected to the slide (40) to move the slide (40) in translation from a high position (PSUP) to a low position (PINF), said slide (40) carrying a peeling roller (51) of the parting means (50), said backing tape (12) extending over a circular arc (100) against the peeling roller (51) in order to reach said recovery spool (35), said low position (PINF) being configured so that said peeling roller (51) presses said tape of impregnated fibres (11) against a deposition surface (2) only in the low position (PINF) of the slide (40), said circular arc (100) occupying a first angle (teta1) in the low position (PINF) of the slide (40) and a second angle (teta2) in the high position (PSUP) of the slide (40),
said first angle (teta1) being greater than said second angle (teta2); the second angle is less than or equal to 60 degrees plus or minus 5 degrees and said deposition head is **characterised in that** the first angle (teta1) is greater than or equal to 90 degrees;
and **in that** said deposition head (20) includes presser means (61) arranged, in the low position (PINF) of the slide (40), upstream from the peeling roller (51) relative to the travel direction of the deposition head (20) while depositing the tape of impregnated fibres (11) on the deposition surface (2).

2. Deposition head (20) according to claim 1, **characterised in that** said parting means (50) include at least one intermediate roller (31, 32) arranged between the peeling roller (51) and said recovery spool (35) relative to the path followed by the backing tape (12) going towards the recovery spool (35).

3. Deposition head (20) according to claim 2, **characterised in that** said at least one intermediate roller (31, 32) includes a first intermediate roller (31) and a second intermediate roller (32), the first intermediate roller (31) being arranged between the second intermediate roller (32) and the recovery spool (35), the second intermediate roller (32) leading to an opening in a cutter system (70), the second intermediate roller (31) avoiding the backing tape (12) coming into destructive contact with the cutter system when the slide is in the low position.

4. Deposition head (20) according to any one of claims 1 to 3, **characterised in that** said peeling roller (51) is arranged at one end of said slide (40).

5. Deposition head (20) according to any one of claims 1 to 4, **characterised in that** said slide (40) carries a clamp (45) that is movable relative to the slide (40), a clamping actuator (47) being connected to said clamp (45) to move the clamp (45) from a clamping position (POSF) to a release position (POSO), the clamp (45) in the clamping position (POSF) constraining said tape of impregnated fibres (11) from moving in translation with the slide (40), the clamp (45) in the release position (POSO) not constraining the tape of impregnated fibres (11) from moving in translation with the slide (40).

6. Deposition head (20) according to claim 5, **characterised in that** said clamp (45) includes a clamping surface (490) parallel to a bearing surface (400) of the slide (40) in the clamping position.

7. Deposition head (20) according to either of claims 5 or 6, **characterised in that** said clamp (45) is movable in pivoting about a clamping axis (AX2) parallel to an axis of rotation (AX1) of the peeling roller (51).

8. Deposition head (20) according to any one of claims 1 to 7, **characterised in that** the slide (40) is movable in pivoting about a disengagement axis (AX3) parallel to an axis of rotation (AX1) of the peeling roller (51).

9. Deposition head (20) according to any one of claims 1 to 8, **characterised in that** said slide (40) carries a heater system (85).

10. Deposition head (20) according to any one of claims 1 to 9, **characterised in that** said deposition head (20) includes a cutter system (70) configured to cut said tape of impregnated fibres (11), said cutter system (70) including an opening (75) through which said peeling roller (51) passes during the movement of the slide (40) between the low position (PINF) and the high position (PSUP).

11. Deposition head (20) according to any one of claims 1 to 10, **characterised in that** said presser means (61) are connected to a compression actuator (63) in order to be movable between a rest position (POS1) and a compression position (POS2), said rest position (POS1) being configured so that the presser means (61) do not press the tape of impregnated fibres (11) against the deposition surface (2), said compression position (POS2) being configured so that the presser means (61) press the tape of impregnated fibres (11) against the deposition surface (2).

12. Device (10) for placing a tape of impregnated fibres (11), the device being provided with a deposition head (20), a movement system (15), and means (16) for controlling said movement system (15) and said deposition head (20), **characterised in that** said deposition head (20) is according to any one of claims 1 to 11.

13. Method for placing a tape of impregnated fibres (11) by means of a placement device (10) according to claim 12, including the following steps:
- starting up the deposition head (20) by moving the slide (40) into the low position (PINF) in order to press the tape of impregnated fibres (11) against the deposition surface (2) with the peeling roller (51)
- moving the deposition head (20) at a first speed (V1);
- stopping the deposition head (20);
- moving the slide (40) into the high position (PSUP); and
- moving the deposition head (20) at a second speed (V2) greater than the first speed (V1);
and in that prior to moving the deposition head (20), the method includes a step of moving the presser means (61) pressing said tape of impregnated fibres (11) against the deposition surface (2).

14. Placement method (10) according to claim 13, **characterised in that** the step of starting up the deposition head (20) comprises the following steps:
- holding the tape of impregnated fibres (11) against moving in translation relative to the slide (40);
- moving the slide (40) into the low position (PINF); and
- parting the tape of impregnated fibres (11) to move in translation relative to the slide (40).
